(19) Europäisches Patentamt
European Patent Office
Office européen des brevets

(11) EP 4 461 758 A1

(12) EUROPEAN PATENT APPLICATION

(43) Date of publication:
**13.11.2024 Bulletin 2024/46**

(21) Application number: **23172733.0**

(22) Date of filing: **11.05.2023**

(51) International Patent Classification (IPC):
***C08F 232/06*** *(2006.01)* ***C08F 299/02*** *(2006.01)*
***C08G 73/12*** *(2006.01)* ***C09J 179/08*** *(2006.01)*
***C09J 197/00*** *(2006.01)*

(52) Cooperative Patent Classification (CPC):
(C-Sets available)
**C08G 73/124; C08F 299/022; C08G 61/00; C08H 6/00; C09J 179/085; C09J 197/005;**
C08G 2261/46 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **VITO NV**
**2400 Mol (BE)**
- **VUB**
**1050 Brussel (BE)**

(72) Inventors:
- **THYS, Marlies**
**2400 Mol (BE)**
- **VENDAMME, Richard**
**2400 Mol (BE)**
- **BRANCART, Joost**
**1851 Grimbergen (BE)**
- **VAN ASSCHE, Guy**
**1560 Hoeilaart (BE)**
- **VAN DEN BRANDE, Niko Paul**
**1050 Brussel (BE)**

(74) Representative: **Arnold & Siedsma**
**Bezuidenhoutseweg 57**
**2594 AC The Hague (NL)**

(54) **REVERSIBLE LIGNIN ADHESIVE**

(57) The present invention relates to a reversible adhesive, and in particular provides a reversible adhesive comprising a Diels-Alder polymer of at least a polymaleimide pre-polymer and a furanfunctionalized lignin-derived compound, having a glass transition temperature of at least - 20 °C. The present invention further relates to a method for preparing the reversible adhesive, and the use of the reversible adhesive to bond materials in a reversible fashion.

EP 4 461 758 A1

(52) Cooperative Patent Classification (CPC): (Cont.)

C-Sets
**C09J 179/085, C08L 97/005;**
**C09J 197/005, C08L 79/085**

**Description**

## FIELD OF THE INVENTION

The present invention relates to a reversible adhesive, and in particular provides a thermally reversible adhesive comprising a Diels-Alder polymer comprising a lignin-derived compound. The present invention further relates to a method for preparing the reversible adhesive, and the use of the reversible adhesive to bond materials in a reversible fashion.

## BACKGROUND TO THE INVENTION

Adhesives, substances that initiate the adhesion of materials to hold them together through adhesive bonding, find a wide range of use in all kinds of industry such as aircraft industry, footwear industry, packaging, construction, furniture etc. They play a crucial role in n the manufacturing of a wide variety of products. The demand for adhesives with a desired degree of structural strength, fatigue resistance and resistance to severe environmental conditions led to the development of high-performance materials, which eventually found their way into many industrial and domestic applications. Adhesives find particular use in the production of wood-based products such as furniture, construction materials and packaging. After curing, adhesives typically form irreversible crosslinked networks, making recycling and processing of end-of-life wood-based product particularly challenging. As a result, a significant number of glued wood-based products end up being incinerated or landfilled. By implementation of reversible bonds in the adhesive formulation the current linear process can be shifted towards a more circular one.

Sridhar et al. (Green Chem., 2020, 22, 8669) have disclosed thermally reversible adhesives based on the Diels-Alder reaction of multifunctional furans, prepared from polyfunctional isocyanates, and poly(ester urethane) maleimide terminated prepolymers. The authors have shown adhesive properties of the adhesive when applied on a beechwood substrate and reversible behavior of the adhesive when applied on an aluminium substrate.

It is an object of the present invention to overcome or improve one or more of the disadvantages of the prior art, or at least offer one or more useful alternatives.

## SUMMARY OF THE INVENTION

According to a first aspect, the present invention provides a thermally reversible adhesive comprising a Diels-Alder polymer of at least a polymaleimide pre-polymer and a furan-functionalized lignin-derived compound; wherein the Diels-Alder polymer has a glass transition temperature of at least -20 °C, as determined by Differential Scanning Calorimetry using a heating rate of 10 $K.min^{-1}$.

It appeared that a thermally reversible adhesive as defined in the first aspect of the invention, comprising a Diels-Alder polymer of a polymaleimide pre-polymer and a furan-functionalized lignin-derived compound with a glass transition temperature of at least -20 °C may be used repeatedly to bond and debond the surfaces of two or more pieces of materials, with only a limited loss of mechanical and/or adhesive properties. It should be appreciated that while the surfaces of two or more pieces of materials may be bonded with the thermally reversible adhesive as defined herein, the adhesive may also penetrate in the material to provide even stronger bonding, depending on the porosity and chemical nature of the material. It further appeared that the thermally reversible adhesive as defined herein can be suitably utilized at room temperature.

According to a second aspect, the present invention provides a method to prepare the thermally reversible adhesive comprising a Diels-Alder polymer of a polymaleimide pre-polymer and a furan-functionalized lignin-derived compound as defined herein, comprising mixing a mixture of the polymaleimide pre-polymer, the furan-functionalized lignin compound, and optionally an organic solvent, at a temperature of at least 10 °C.

It was found that the thermally reversible adhesive as defined herein may be prepared by mixing a mixture of a polymaleimide pre-polymer and a furan-functionalized lignin compound at a temperature of at least 10 °C, such as at room temperature. It was further found that when the furan-functionalized lignin-derived compound and/or the polymaleimide pre-polymer is a solid, it may be beneficial to add an organic solvent to the mixture before mixing it a temperature of at least 10 °C. It was also found that volatile solvents, for example chloroform and THF are particularly suitable organic solvents to be used in the method as described herein, as they may be easily removed after the reaction.

According to another aspect, the present invention provides a use of the thermally reversible adhesive comprising a Diels-Alder polymer of a polymaleimide pre-polymer and a furan-functionalized lignin-derived compound as defined herein.

It was also found that the thermally reversible adhesive as defined herein may be used to create bonding between two or more pieces of the same material or different materials, such as wood, metal, glass, and the like.

BRIEF DESCRIPTION OF THE DRAWINGS

**Figure 1** shows the stress-strain diagram of a free-standing film of the reversible adhesive prepared according to Example 1, comprising a Diels-Alder polymer of bismaleimide-modified dimer fatty acid BMI-689 and furan-functionalized ethyl methyl ketone extracted Kraft Lignin (FKL).

**Figure 2** shows the results of a lap shear test of wooden substrates glued together with reversible adhesives prepared according to Examples 1-3, with an overlapping area of 12.5 mm by 22 mm.

**Figure 3** shows the results of a lap shear test of wooden substrates glued together with reversible adhesives prepared according to Example 1 and 4, with an overlapping area of 12.5 mm by 22 mm.

**Figure 4** shows wooden substrates glued together with the reversible adhesive prepared according to Example 1, with an overlapping area of 12.5 mm by 22 mm holding, a 10 kg weight.

**Figure 5** shows the stress-strain diagram of wooden substrates glued together with reversible adhesive prepared according to Example 1 after different bonding/debonding cycles.

**Figure 6** shows the stress-strain diagram of different substrates glued together with reversible adhesive prepared according to Example 1.

DETAILED DESCRIPTION OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

As mentioned hereinbefore, according to a first aspect, the present invention provides a thermally reversible adhesive comprising a Diels-Alder polymer of at least a polymaleimide pre-polymer and a furan-functionalized lignin-derived compound; wherein the Diels-Alder polymer has a glass transition temperature of at least -20 °C, as determined by Differential Scanning Calorimetry using a heating rate of 10 $K.min^{-1}$.

As mentioned herein and unless stated otherwise, the term 'thermally reversible adhesive' should be understood as an adhesive capable of reversibly binding the surfaces of two or more parts or pieces of the same or different materials, where the bond can be repeatedly established and released, i.e. the surfaces can be repeatedly bonded and debonded under the influence of a temperature change.

As mentioned herein and unless stated otherwise, the term 'Diels-Alder polymer' should be understood as a polymer network containing reversible covalent crosslinks, formed by a Diels-Alder reaction between a furan group and a maleimide group, resulting in either isomer of the cycloadduct, referred to as a 'Diels-Alder bond'. The network structure of the Diels-Alder polymer comprised in the thermally reversible adhesive of the invention, is the result of the reaction of two or more reactive compounds or building blocks, wherein at least one reactive compound or building block is a furan-functionalized lignin-derived compound and a least one reactive compound or building block is a polymaleimide pre-polymer. The Diels-Alder polymer may further comprise other furan-containing monomers or compounds. In a particular embodiment, the present invention provides the thermally reversible adhesive as defined herein, comprising a Diels-Alder polymer of a polymaleimide pre-polymer and a furan-functionalized lignin-derived compound.

The chemical reversible reaction which occurs between the furan and maleimide functional groups of the furan-functionalized lignin-derived compounds, represented by 'A', and the polymaleimide pre-polymers, represented by 'B', is illustrated in Scheme 1. The Diels-Alder reaction, forming said Diels-Alder bonds, is an equilibrium reaction making the formed crosslink bonds dynamic. Bonds are constantly broken and reformed in said dynamic network over time.

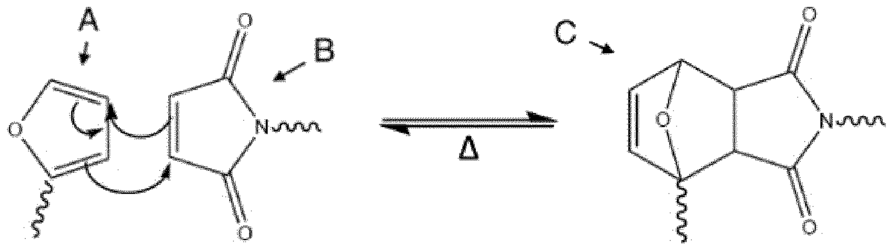

**Scheme 1**

It is well-known that lignocellulosic biomass is a promising natural source of chemical compounds comprising three main components, namely cellulose, hemicellulose and lignin, with lignin being the most abundant source of biobased phenolics. Lignin is a complex polydisperse biopolymer mainly composed of three main monolignols, p-coumaryl alcohol (H units), sinapyl alcohol (S units) and coniferyl alcohol (G units). Their respective content in the lignocellulosic biomass depends on the plant source. For example, gymnosperms contain almost exclusively G units, angiosperms contain a mixture of G and S units, while H units are more abundant in grasses and softwood.

Depending on the process used to separate the lignin from the (hemi-)cellulose, different types of lignin are obtained as a byproduct. Lignosulfonates for instance are byproducts of the sulfite pulping process and consist of aromatic and aliphatic phenolic groups, and carboxylic acid groups like other types of lignin, but it additionally contains aliphatic sulfonic acid salts. Lignosulfontates are water-soluble anionic polymers that can be very polydisperse in terms of molecular mass. Other pulping processes, such as the Kraft process which make use of a hot mixture of water, sodium hydroxide (NaOH), and sodium sulfide ($Na_2S$), lead to a black liquor containing lignin. This black liquor may be further processed into sulfonated lignin, but it may also be further refined by selective solvent extraction with a suitable solvent. This extraction may lead to fractions with lower polydispersity.

Another known process to separate lignin from the (hemi-)cellulose, is metal catalyzed hydrogenolysis. Depending on the reaction conditions, this process produces reduced monolignols and dimeric and oligomeric structures (lignin oils). The main small molecular weight compounds, such as reduced monolignols, commonly found in depolymerized lignins are: propylguaiacol (PG), propylsyringol (PS), dihydroconiferyl alcohol (DCA) and dihydrosinapyl alcohol (DSA). The ratio between G and S can be tuned by the choice of feedstock, while the ratio between alcohol and propyl derivatives by the choice of catalyst.

In the context of the current invention, the term 'lignin-derived compound' refers to any product or mixture of products resulting from the pre-treatment, modification, functionalization, depolymerization, conversion, degradation, hydrolysis, extraction and/or dissolution of lignin, lignin-containing mixtures or lignocellulosic biomass. Typical, yet non-limiting, examples of lignocellulosic biomass are softwood, hardwood, crops, trees, bushes, grasses, agricultural residues and waste wood. Typical, yet non-limiting, lignin-containing mixtures are mixtures resulting from various (pulping) processes, such as kraft lignin, black liquor, lignosulfonates, organosolv lignins, hydrolysed lignin, soda lignin, steam exploded lignin, lignin hydrogenolysis oil. The term 'lignin-derived compound' may also refer to synthetically produced products or mixtures from (reduced) monolignols, such as propylguiacol, a propylguiacol dimer, and the like.

The term 'lignin hydrogenolysis oil' is a known term in the art, and refers to a mixture of lignin monomers, dimers, and oligomers obtained from the metal-catalyzed hydrogenolysis of lignin, lignin-containing mixtures or lignocellulosic biomass, such as described by Torr et al. (Bioresource Technology 102(16):7608-11). A lignin hydrogenolysis oil is characterized by comprising dihydroconiferyl alcohol as one of its constituents.

In the context of the current invention, the term 'furan-functionalized lignin-derived compound' refers to a lignin-derived compound bearing one or more furan groups, represented by 'A' in Scheme 1. The furan groups may be introduced on the lignin-derived compounds via a functionalization reaction. Introduction of furan groups onto the lignin-derived compound to obtain the furan-functionalized lignin-derived compounds as used herein, can be done in different ways known to the skilled person. Scheme 2 shows a non-limiting representation of conversion of a lignin-derived compound, such as a propylguaiacol dimer, into a furan-functionalized lignin-derived compound by reaction of the phenolic OH-groups with furfuryl glycidyl ether. The furan-functionalized propylguaiacol dimer (FPD) represented in Scheme 2 has an average functionality of 2.

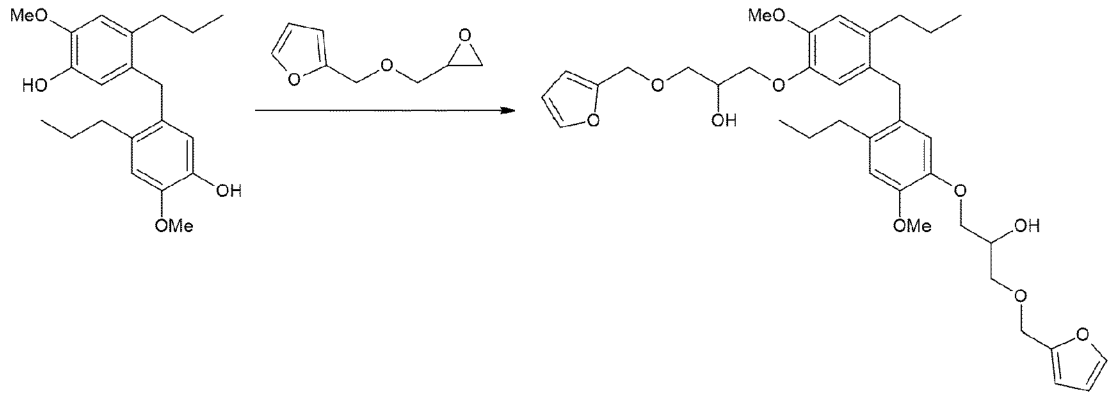

**Scheme 2**

In the context of the current invention, the term 'polymaleimide pre-polymer' refers to a chemically defined compound comprising a pre-polymer backbone comprising two or more maleimide groups, wherein the maleimide groups are connected to the pre-polymer backbone via the N atom, represented by 'B' in Scheme 1.

Non-limiting examples of polymaleimide pre-polymers are bismaleimide-modified dimer fatty acid BMI-689, bismaleimide-modified BPA-phthalamide oligomer BMI-1400, and bismaleimide-modified polyether PPO-6. In an embodiment, the present invention provides the thermally reversible adhesive as defined herein, wherein the polymaleimide pre-polymer is selected from bismaleimide-modified dimer fatty acid BMI-689, bismaleimide-modified BPA-phthalamide oligomer BMI-1400, and bismaleimide-modified polyether PPO-6, or any combination thereof. In a particular embodiment, the present invention provides the thermally reversible adhesive as defined herein, wherein the polymaleimide pre-polymer is selected from any of the tables as defined herein.

In the context of the current invention, the terms 'glue' and 'adhesive' are synonymously used for a compound having some degree of adhesive properties, in essence the ability to provide bonding between two or more pieces of material.

It was surprisingly found that a thermally reversible adhesive comprising a Diels-Alder polymer of a polymaleimide pre-polymer and a furan-functionalized lignin-derived compound with a glass transition temperature of at least -20 °C can be suitably used at room temperature. It was further found that the thermally reversible adhesive as defined herein, may be used repeatedly to bond and debond two or more pieces of material, with only a limited loss of mechanical and/or adhesive properties. The thermally reversible adhesive as defined herein may be used in any suitable form, such as a paste, film or sheet. It was also found that the thermally reversible adhesive as defined herein can be easily shaped into a sheet or film and used as such.

It was further found that a Diels-Alder polymer with a glass transition temperature of at least -10 °C may lead to further improved properties of the resulting thermally reversible adhesive, such as an improved strength, shown by an increase of the Youngs modulus and/or an increase of the stress at break (in a stress-strain diagram). In useful embodiments of the invention, the Diels-Alder polymer has a glass transition temperature of at least -10, preferably at most 60 °C, more preferably from -5 to 50 °C, even more preferably from 0 to 30 °C. In a particular embodiment, the present invention provides the thermally reversible adhesive as defined herein, wherein the Diels-Alder polymer has a glass transition temperature from -10 to 60 °C, preferably from 0 to 30 °C.

It was also found that the aromatic content of the polymaleimide pre-polymer may influence the properties of the thermally reversible adhesive, such as the glass transition temperature of the Diels-Alder polymer comprised in the thermally reversible adhesive, but also its other mechanical properties, such as an improved strength, shown by an increase of the Youngs modulus and/or an increase of the stress at break (in a stress-strain diagram). The aromatic content of the polymaleimide pre-polymer is determined as the ratio of the sum of the molecular weight of all atoms in and directly connected to an aromatic ring, relative to the total molecular weight of all atoms in the polymaleimide pre-polymer.

It should be appreciated that the polymaleimide pre-polymer may be one specific maleimide compound, but that it also may be a mixture of different maleimide compounds.

The incorporation of a furan-functionalized lignin-derived compound in the reversible adhesive may have a beneficial effect on the reversibility of the resulting adhesive. The anti-oxidant properties of the lignin-derived phenolic compounds may for instance suppress the homopolymerization of the polymaleimide pre-polymer during for instance heating of the thermally reversible adhesive. Homo-polymerization of the polymaleimide pre-polymer is an irreversible reaction, which inevitably leads to a reduced reversibility of the adhesive. The aromatic structure of the lignin-derived

phenolic compounds may also lead to improved mechanical properties of the resulting adhesive, such as an improved strength, shown by an increase of the Youngs modulus and/or an increase of the stress at break (in a stress-strain diagram). As already disclosed herein, when the polymaleimide pre-polymer is substantially aromatic, the thermally reversible adhesive may become too brittle to be useful as an adhesive. Without being bound to theory, it is believed that the combination of the substantially aromatic lignin-derived phenolic compounds with substantially aromatic polymaleimide pre-polymers may form the basis for the problem of brittleness. To address the problem of brittleness, in useful embodiments of the invention, the aromatic content of the polymaleimide pre-polymer, determined as the ratio of the sum of the molecular weight of all atoms in and directly connected to an aromatic ring, relative to the total molecular weight of all atoms in the polymaleimide pre-polymer, is at most 50 %, such as 50 %, 40 %, 30 %, 25 %, 20 %, 15 % 10 %, 5 %, 2 %, 1 % and even 0 %. In a particular embodiment, the present invention provides the thermally reversible adhesive as defined herein, wherein the polymaleimide pre-polymer has an aromatic content, determined as the ratio of the sum of the molecular weight of all atoms in and directly connected to an aromatic ring, relative to the total molecular weight of all atoms in the polymaleimide pre-polymer, of at most 50 %, preferably at most 40 %, more preferably at most 30 %, even more preferably an aromatic content from 0 to 20 %.

In the context of the current invention, the term 'functionality', 'average functionality', or 'AF' refers to the number of functional groups on a molecule or compound, such as the number of maleimide groups on a polymaleimide pre-polymer, or the number of furan groups on a furan-functionalized lignin-derived compound. The functionality can be an integer for discrete compounds, such as 1, 2, 3, or more, but it can also be a decimal number resulting from the average from a mixture of compounds having different functionalities per molecule or compound, such as 0.95, 1.5, 2.1, 2.2, 2.5, 3.2, and the like. It appeared that the functionality of the polymaleimide pre-polymer may have an influence on cross-linking of the Diels-Alder network, such as the degree of cross-linking, and/or on the properties of the resulting reversible lignin adhesive, such as an improved strength, shown by an increase of the Youngs modulus and/or an increase of the stress at break (in a stress-strain diagram). In useful embodiments of the invention, the (average) maleimide functionality of the polymaleimide pre-polymer is at least 2, preferably from 2 to 3, more preferably a functionality from 2 to 2.5. In an embodiment, the present invention provides the thermally reversible adhesive as defined herein, wherein the (average) maleimide functionality of the polymaleimide pre-polymer is at least 2. In a particular embodiment, the present invention provides the thermally reversible adhesive as defined herein, wherein the polymaleimide pre-polymer is a bismaleimide.

It also appeared that the functionality of the furan-functionalized lignin-derived compound may have an influence on cross-linking of the Diels-Alder network and/or on improved properties of the resulting reversible lignin adhesive. In useful embodiments of the invention, the (average) furan functionality of the furan-functionalized lignin-derived compound is at least 2, preferably at most 6, more preferably from 2 to 5, even more preferably from 2.5 to 4.5, yet even more preferably from 3 to 4.5. In an embodiment, the present invention provides the thermally reversible adhesive as defined herein, wherein the (average) furan functionality of the furan-functionalized lignin-derived compound is at least 2, preferably from 2 to 5.

The term 'functional group concentration' or 'FGC' refers to the average concentration of functional groups being maleimide groups or furan groups, relative to the mass of the total compound and expressed in mmol/g, on the polymaleimide pre-polymers and the furan-functionalized lignin-derived compounds, respectively.

The functional group concentration of the furan-functionalized lignin-derived ($FGC_{furan}$) compound may depend on a number of different parameters. It may a.o. depend on the hydroxyl content of the lignin-derived compound, on the stoichiometry of the lignin-derived compound versus the reagent used to introduce the furan group, such as furfuryl glycidyl ether, during the reaction comprising both compounds and it may depend on the efficiency (i.e. yield and selectivity) of that reaction.

The 'hydroxyl content' of a lignin-derived compound, expressed in mmol/g, refers to the molar equivalents of phenolic OH-groups as determined by quantitative $^{31}P$ NMR spectroscopy according to the experimental protocol reported by Pu et. al (Energy Environ. Sci. 2011, 4, 3154-3166) using cyclohexanol as internal standard.

To determine the functional group concentration of furan groups of the furan-functionalized lignin-derived compound ($FGC_{furan}$), the 'hydroxyl content' from the lignin-derived compound is determined according to the protocol mentioned above, before ($[PhenOH]_{before}$) and after ($[PhenOH]_{after}$) introduction of the furan groups, and subsequently determining the difference between both values according to the formula:

$$FGC_{furan} = [PhenOH]_{before} - [PhenOH]_{after}$$

It was also found that the number average molecular weight ($M_n$) of the lignin-derived compound of the furan-functionalized lignin-derived compound may influence the properties of the resulting thermally reversible adhesive. In useful embodiments of the invention, the number average molecular weight ($M_n$) of the lignin-derived compound of the furan-functionalized lignin-derived compound may be about 300 g/mol, about 400 g/mol, about 500 g/mol, about 600 g/mol, about 800 g/mol, about 1000 g/mol, or more than 1000 g/mol. A lignin-derived compound with an $M_n$ of about

300 g/mol could be mainly composed of lignin monomers, a lignin-derived compound with an $M_n$ of about 600 g/mol could be mainly composed of lignin dimers, while a lignin-derived compound with an $M_n$ of about 1000 g/mol could be mainly composed of lignin oligomers. It should however be appreciated that the lignin-derived compound applicable in the invention also encompasses mixtures of monomer, dimers and oligomers, leading to different $M_n$ values in the range from about 300 to about 2500 g/mol. It was further found that furan-functionalized lignin-derived compounds based on lignin-derived compounds having higher $M_n$ values, such as at least about 5000 g/mol, may lead to compatibility issues with the polymaleimide pre-polymer, solubility issues with the solvent if present, or any combinations thereof. In an embodiment, the present invention provides the thermally reversible adhesive as defined herein, wherein the lignin-derived compound of the furan-functionalized lignin-derived compound has a number average molecular weight of at least 300 g/mol, preferably from 400 to 2500 g/mol, more preferably from 500 to 2000 g/mol, even more preferably from 600 to 1700 g/mol.

It appeared that particular lignin-derived compounds may be particularly suited to prepare a thermally reversible adhesive as defined herein. In a specific embodiment, the present invention provides the thermally reversible adhesive as defined herein, wherein the lignin-derived compound of the furan-functionalized lignin-derived compound is a solvent extracted lignin, in particular a solvent extracted Kraft lignin. In another specific embodiment, the present invention provides the thermally reversible adhesive as defined herein, wherein the lignin-derived compound of the furan-functionalized lignin-derived compound is a depolymerized lignin, in particular a depolymerized organosolv lignin. In yet another specific embodiment, the present invention provides the thermally reversible adhesive as defined herein, wherein the lignin-derived compound of the furan-functionalized lignin-derived compound is a lignin hydrogenolysis oil. In yet another specific embodiment, the present invention provides the thermally reversible adhesive as defined herein, wherein the lignin-derived compound of the furan-functionalized lignin-derived compound is a lignin dimer, in particular a propylguaiacol dimer.

It further appeared that the number average molecular weight ($M_n$) of the polymaleimide pre-polymer may have an influence on the properties of the resulting thermally reversible adhesive, such as the glass transition temperature. In useful embodiments, the polymaleimide pre-polymer may have a number average molecular weight of at least about 300 g/mol up to about 2500 g/mol. In another embodiment, the present invention provides the thermally reversible adhesive as defined herein, wherein the polymaleimide pre-polymer has a number average molecular weight of at least 300 g/mol, preferably from 400 to 2500 g/mol, more preferably from 500 to 2000 g/mol.

When the furan-functionalized lignin-derived compound is a polymeric compound and/or a mixture of compounds, the average furan functionality ($AF_{furan}$) can be determined based on the number average molecular weight ($M_n$) of the furan-functionalized lignin-derived compound ($M_n$(furan)) according to:

$$AF_{furan} = FGC_{furan} \times M_n(furan)$$

For commercial bismaleimides, with an (average) functionality ($AF_{maleimide}$) of 2, wherein the number average molecular weight ($M_n$)(maleimide) is provided by the supplier, the functional group concentration of maleimide groups of the polymaleimide pre-polymer ($FGC_{maleimide}$) can be determined according to

$$FGC_{maleimide} = AF_{maleimide} / M_n(maleimide)$$

If the (average) functionality ($AF_{maleimide}$) and/or the number average molecular weight ($M_n$) is unknown, the average molecular weight could be determined according to techniques known in the art, such as GPC, and the functional group concentration ($FGC_{maleimide}$) could be determined by utilizing $^1$H NMR. The (average) functionality ($AF_{maleimide}$) could then be determined according to

$$AF_{maleimide} = FGC_{maleimide} \times M_n(maleimide)$$

It was also found that the maleimide-to-furan stoichiometric ratio (r), in other words the molar ratio of maleimide groups to furan groups, may have an influence on the properties of the resulting thermally reversible adhesive. The maleimide-to-furan stoichiometric ratio (r) of a combination of A gram of polymaleimide pre-polymer(s) having a maleimide functional group concentration ($AF_{maleimide}$) with B gram of furan-functionalized lignin-derived compound having a furan functional group concentration ($AF_{furan}$) according to.

$$r = (A \times FGC_{maleimide})/(B \times FGC_{furan})$$

In useful embodiments of the invention, the maleimide-to-furan stoichiometric ratio between the polymaleimide pre-polymer and the furan-functionalized lignin-derived compound is at most about 1, i.e. an equimolar amount of maleimide and furan groups. In other useful embodiments of the invention, the maleimide-to-furan stoichiometric ratio between the polymaleimide pre-polymer and the furan-functionalized lignin-derived compound is less than 1, i.e. an excess of furan to maleimide groups. Without being bound to theory, it is believed that by using a (slight) excess of furan to maleimide groups, the risk to homopolymerization of maleimide groups may be minimized, at least substantially. As mentioned hereinbefore, homo-polymerization of the polymaleimide pre-polymer is an irreversible reaction, which inevitably leads to a reduced reversibility of the adhesive. In a particular embodiment, the present invention provides the thermally reversible adhesive as defined herein, wherein the maleimide-to-furan stoichiometric ratio between the polymaleimide pre-polymer and the furan-functionalized lignin-derived compound is from 1 to 0.25, preferably from 1 to 0.6.

It appeared that polymer additives known to the skilled person, such as pigments, viscosity modifiers, texture modifiers, UV stabilizers, may be added to change the properties of the thermally reversible adhesive as defined herein, without compromising its desired adhesive properties. It was however further found that the Diels-Alder polymer as defined herein, without any additives, is particularly suited as a thermally reversible adhesive. In another embodiment, the present invention provides the thermally reversible adhesive as defined herein, wherein the thermally reversible adhesive is the Diels-Alder polymer of a polymaleimide pre-polymer and a furan-functionalized lignin compound.

It further appeared that the thermally reversible adhesive as defined herein can be easily shaped into a sheet or film with a desired thickness. Such a sheet or film may be suitably cut to the desired shape or size to attach two pieces of material, making the thermally reversible adhesive as defined herein particularly useful for its application. In yet another embodiment, the present invention provides the thermally reversible adhesive as defined herein, wherein the thermally reversible adhesive is provided as a sheet or a film.

As mentioned hereinbefore, according to a second aspect, the present invention provides a method to prepare the thermally reversible adhesive comprising a Diels-Alder polymer of a polymaleimide pre-polymer and a furan-functionalized lignin-derived compound as defined herein, comprising mixing a mixture of the polymaleimide pre-polymer, the furan-functionalized lignin compound, and optionally an organic solvent, at a temperature of at least 10 °C.

It was found that mixing a mixture of a polymaleimide pre-polymer, a furan-functionalized lignin compound, and optionally an organic solvent at a temperature of at least 10 °C, for instance at room temperature, provides the thermally reversible adhesive as defined herein. The polymaleimide pre-polymer, the furan-functionalized lignin compound, and optionally the organic solvent may for instance be mixed at a temperature of at least 10 °C, at room temperature, but it may also be mixed at a higher temperature, for instance at a temperature of 30°, 40 °C, or 50 °C. It was further found that when the furan-functionalized lignin-derived compound and/or the polymaleimide pre-polymer is a solid, it may be beneficial to add an organic solvent to the mixture before mixing it a temperature of at least 10 °C. All organic solvents able to dissolve the polymaleimide pre-polymer and the furan-functionalized lignin compound may be suitably used. It appeared that chloroform and THF are particularly suitable organic solvents to be used in the method as described herein, as they may be easily removed after the adhesive has been formed. The mixture may for instance be mixed, such as by stirring or agitation, for several hours at room temperature to support/promote polymerization and form the Diels-Alder polymer. The mixture may for instance be mixed, such as by stirring or agitation for 1 hour, for 2 hours, for 4 hours, for 6 hours, for 8 hours, for 12 hours, or even overnight. It was however found that when the mixture is mixed, such as by stirring or agitation, at room temperature overnight, gelation of the mixture may occur, making processing of the resulting thermally reversible adhesive more difficult. In an embodiment, the present invention provides the method as defined herein, wherein the mixture is mixed at a temperature from 10 to 30 °C for at most 12 hours, preferably at most 10 hours, more preferably from 4 to 8 hours.

After mixing, such as stirring or agitating, the mixture may subsequently be left at room temperature for further polymerization and form the Diels-Alder polymer.

While the thermally reversible adhesive as defined herein can be used in any shape or form, it appeared to be beneficial to prepare the thermally reversible adhesive in the form of a sheet or film. For this purpose, the thermally reversible adhesive obtained according to the method as defined herein may be cast in a mold. In an embodiment, the present invention provides the method as defined herein, further comprising the step of casting the thermally reversible adhesive in a mold.

It was further found that depending on the glass transition temperature of the Diels-Alder polymer obtained in the method as defined herein, it may be beneficial to subject the thermally reversible adhesive to a thermal treatment, also referred to as post-curing of the thermally reversible adhesive. Post-curing is typically performed to enhance the mobility of the reactive compounds in a polymerization reaction, leading to further reactions of the reactive groups, and hence further crosslinking. The thermal treatment, and thus the enhanced crosslinking, may lead to further improved properties of the resulting thermally reversible adhesive, such as an improved strength, shown by an increase of the Youngs modulus and/or an increase of the stress at break (in a stress-strain diagram).This thermal treatment is typically performed at temperatures of at least 20 °C, such as 20 °C, 30 °C, 50 °C, preferably of at most 100 °C, such as 100 °C, 90 °C, 80 °C, 70 °C, 60 °C. In an embodiment, the present invention provides the method as defined herein, further

comprising the step of thermally treating the thermally reversible adhesive at a temperature of at least 20 °C, preferably from 50 to 100 °C.

It was also found that a more homogeneous film or sheet may be obtained by hotpressing the thermally reversible adhesive. Hotpressing is typically performed at an elevated temperature of at least 50°C, such as 50 °C, 60 °C, 70 °C, 75 °C, 80 °C, 90 °C, preferably of at most 150 °C, such as 150 °C, 140 °C, 130 °C, 125 °C, 120 °C, 110 °C, 100 °C. During hotpressing, the thermally reversible adhesive may be provided in a mold to control the dimensions of the hotpressed film or sheet. In an embodiment, the present invention provides the method as defined herein, further comprising the step of hotpressing the thermally reversible adhesive at a temperature of at least 50 °C, preferably from 60 to 150 °C, more preferably from 75 to 120 °C.

According to another aspect, the present invention provides a use of the thermally reversible adhesive comprising a Diels-Alder polymer of a polymaleimide pre-polymer and a furan-functionalized lignin-derived compound as defined herein.

The thermally reversible adhesive as defined herein may for instance be used to create bonding between two or more pieces of the same material or different materials, such as wood, metal, glass, and the like. In a particular embodiment, the present invention provides the use as defined herein, for bonding two or more pieces of the same material or different materials. In a more particular embodiment, the present invention provides the use as defined herein, for bonding two or more pieces of wood, metal, glass, or combinations thereof. To provide bonding between two or more pieces of materials, in a first step, patches of solidified sheet or film may be cut from the thermally reversible adhesives as described herein. These patches may be used to affixe/adhere different materials, such as wooden bars or aluminium sheets, by applying a patch of the adhesive along a first side to one piece of wooden bar or aluminium sheet, contacting a second piece of wooden bar or aluminium sheet to the second, exposed part of the patch, and activating the adhesive by providing heat. This heat may be provided by any means capable of raising the temperature of the thermally reversible adhesive in contact with the two or more pieces of material. It was found that the heat may be suitably provided by applying local heat at the adhesion spot (e.g. with a heat gun) or by clamping the two pieces of material together and heating the samples for example in an oven, for instance at 130 °C for 30 min. In a final step the adhered materials are allowed to cool down to provide the bonded or adhered materials.

The compounds of the present invention can be prepared according to the method(s) provided in the examples hereinafter, but those skilled in the art will appreciate that these are only illustrative for the invention and that the compounds of this invention can be prepared by any of several standard synthetic processes commonly used by those skilled in the art of organic chemistry.

EXAMPLES

**Materials**

Bismaleimide-modified dimer fatty acid BMI-689, and bismaleimide-modified BPA-phthalamide oligomers BMI-1400 and BMI-1700 were obtained from Designer Molecules Inc. Bismaleimide-modified polyethers PPO-6 and PPO-30 were obtained from Specific Polymers.

| Maleimide | Chemical structure | Mn ($g.mol^{-1}$) | $FGC_{maleimide}$ ($mmol.g^{-1}$) | $AF_{maleimide}$ |
|---|---|---|---|---|
| BMI-689 | 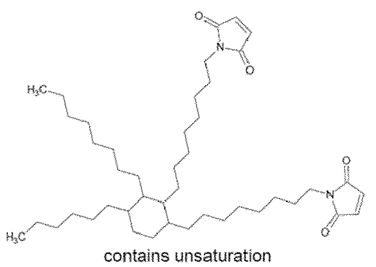 contains unsaturation | 689 | 2.9 | 2 |
| BMI-1400 | 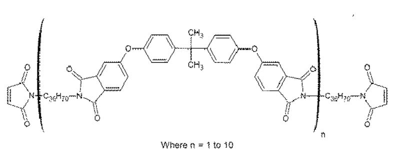 Where n = 1 to 10 | 1764 | 1.1 | 2 |

(continued)

| Maleimide | Chemical structure | Mn (g.mol$^{-1}$) | FGC$_{maleimide}$ (mmol.g$^{-1}$) | AF$_{maleimide}$ |
|---|---|---|---|---|
| BMI-1700 | 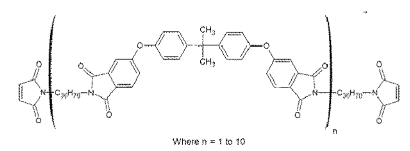 | 2734 | 0.7 | 2 |
| PPO-6 | 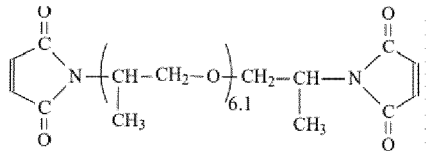 | 696 | 2.9 | 2 |

Furan-functionalized Kraft Lignin (FKL) was prepared and characterized as described in literature (Macromolecules 2021, 54, 20, 9750-9760) starting from ethyl methyl ketone extracted Kraft Lignin. Depolymerized Organosolv Lignin (DOL) was prepared according to a procedure described in literature (ACS Sustainable Chem. Eng. 2018, 6, 9, 11211-11218), starting from wheat straw. The furan-functionalization of the DOL was performed according to the procedure used for the Kraft Lignin, providing Furan-functionalized Depolymerized Organosolv Lignin (FDOL). The furan modification of the propylguiacol dimer was also performed according to the procedure used for the Kraft Lignin, providing Furan-functionalized propylguiacol dimer (FPD).

| Furan compound | Lignin type | $M_n$ (g.mol$^{-1}$) | [PhenOH]$_{before}$ (mmol.g$^{-1}$) | [PhenOH]$_{after}$ (mmol.g$^{-1}$) | FGC$_{furan}$ (mmol.g$^{-1}$) |
|---|---|---|---|---|---|
| FKL | Solvent extracted Kraft Lignin | 1010 | 5.05 | 0.46 | 4.59 |
| FDOL | Depolymerized Organosolv Lignin | 1050 | 2.89 | 0.72 | 2.17 |
| FPD | Propylguiacol dimer | 639 | / | / | 3.06 |

Chloroform, acetone, and tetrahydrofuran (THF) were purchased from Sigma-Aldrich and used as received.

The wooden bars were obtained from pine wood with dimensions of 100 x 25 x 2 mm (l x w x h) for stress-strain experiments and 120 x 15 x 4 mm for the qualitative adhesion tests. All wooden bars were polished using sandpaper prior to use. The aluminium sheets had dimensions of 85 x 20 x 1 mm and were polished prior to use.

**Methods and Equipment**

Fourier transform infrared spectroscopy (FTIR) was measured in attenuated total reflectance mode (ATR-FTIR) on a Nicolet iS10 spectrometer of Thermo Fisher. The samples were measured under atmospheric conditions on a diamond crystal with a spectral range of 4000 to 400 cm$^{-1}$. The scans were performed with a scan resolution of 4 cm$^{-1}$ and 32 scans per sample. Blank scans were subtracted from the sample scans prior to their analysis.

Differential Scanning Calorimetry (DSC) was performed using a TA Instruments Discovery DSC 250 equipped with a refrigerated cooling system that allows cooling to -90 °C. The samples were measured in Tzero pans with perforated Tzero hermetic lids to allow a nitrogen atmosphere around the sample. DSC thermograms were recorded with a heating rate of 10 K.min$^{-1}$. Only experimental data obtained from the second heating step were reported. The glass transition temperature was derived from the DSC analysis data.

Thermal gravimetric analysis (TGA) thermograms were measured on a TA Instruments Q5000. The measurements were performed under an air flow rate of 25 mL min-1 and a heating rate of 20 °C.min$^{-1}$ from 50 °C to 600 °C.

Dynamic mechanical analysis (DMA) measured on a Discovery DMA 850 from TA instruments to determine the viscoelastic properties. The DMA was equipped with a gas cooling accessory (GCA) to allow cooling below -100 °C. Measurements were performed in tension mode using a film tension clamp. Each material was measured 2 times, with sample dimensions of ca. 0.5 mm thickness, a width of 7.0 mm, and a length of 7 mm. Creep measurements were performed with a force of 2 N with a creep and recovery time of 10 min.

Dynamic rheometry, stress-relaxation and viscosity measurements were performed on a Discovery HR-2 hybrid rheometer of TA Instruments. The instrument was equipped with a forced convection oven (FCO) surrounding the 8 mm plate-plate configuration. Stress-relaxation was performed with a 1% strain and an axial force of 1 N. The complex viscosity was measured using a 1% strain with a logarithmic sweep of 0.1 Hz to 10 Hz. In all measurements, the sample disks had a diameter of 8 mm and a thickness of ca. 0.5 mm.

Tensile analysis of the reversible networks was conducted on an Instron 6800 Single column tensile tester using pneumatic clamps. 3 replicates were measured for each sample with dimensions of 22 x 5 x 0.6-0.7 mm. All tests were performed at room temperature and 50-60% relative humidity. The crosshead speed was 5 $mm.min^{-1}$.

Lap shear testing on the wooden and metal bars was conducted on an Instron 5582 using a 10 kN load cell. The wooden bars were measured using a crosshead speed of 2 $mm.min^{-1}$.

## Example 1

Example 1 was prepared by dissolving BMI-689 and FKL lignin in a ratio of 1 :1.2, in chloroform, and stirring the solution for 6 hours at room temperature. The resulting mixture was subsequently sonicated for 2 hours and cast into a mold. The casted solution was dried overnight at room temperature and treated at 40 °C in a vacuum oven for 72 hours.

Prior to its use as an adhesives sheet, the material was hotpressed (2 tonne) at 120 °C for 5 min to obtain a sheet or film with a thickness from 0.3 to 0.5 mm.

## Example 2

Example 2 was prepared according to the procedure of example 1, but the maleimide used was PPO-6.

## Example 3

Example 3 was prepared according to the procedure of example 1, but the maleimide used was BMI-1400.

## Example 4

Example 4 was prepared according to the procedure of example 1, but by using BMI-689 and FDOL as furan-functionalized lignin-derived compound in a ratio of 1:1.

## Example 5

Example 5 was prepared according to the procedure of example 1, but by using a furan-modified propylguiacol dimer (FPD).

## Example 6

Patches of solidified sheet or film were cut from the thermally reversible adhesives prepared according to Examples 1-4, and were used to glue the wooden bars and/or aluminium sheets, by applying a patch to one piece of wooden bar or aluminium sheet, providing a second piece of wooden bar or aluminium sheet to the exposed part of the patch, and activating the adhesive by applying local heat at the adhesion spot (e.g. with a heat gun, 250 °C, 10 s, 2 cm distance) and allowing the glued substrates to cool down.

## Example 7

Wooden bars were glued together by the thermally reversible adhesive prepared according to Example 1 by the procedure described in Example 6. The ungluing and regluing of the wooden bars was performed by multiple cycles of applying local heat and allowing the sample to cool down.

## Analysis data

It is shown in Figure 1 that a thermally reversible adhesive prepared according to Example 1, comprising a Diels-Alder polymer of bismaleimide-modified dimer fatty acid BMI-689 and furan-functionalized ethyl methyl ketone extracted Kraft Lignin (FKL) provides ideal mechanical properties for adhesive applications.

The lap shear test data provided in Figure 2, wherein the thermally reversible adhesive prepared according to

Examples 1-3, comprising a Diels-Alder polymer of furan-functionalized ethyl methyl ketone extracted Kraft Lignin (FKL) with different bismaleimides (BMI-689, PPO-6, BMI-1400) is used to glue wooden substrates with an overlapping area of 12.5 mm by 22 mm, according to Example 6, indicates good adhesive strength for all three examples.

Figure 3 provides the lap shear test data of wooden substrates glued with thermally reversible adhesive prepared according to Examples 1 and 4, comprising a Diels-Alder polymer of bismaleimide BMI-689 with different furan-functionalized lignin-derived compounds (FKL and FDOL), with an overlapping area of 12.5 mm by 22 mm, prepared according to Example 6. These results indicate good adhesive strength for both examples.

Figure 4 illustrates the strength of the thermally reversible adhesive prepared according to Example 1, comprising a Diels-Alder polymer of bismaleimide-modified dimer fatty acid BMI-689 and furan-functionalized ethyl methyl ketone extracted Kraft Lignin (FKL), used to provide bonding between pieces of wooden substrates with an overlapping area of 12.5 mm by 22 mm, prepared according to Example 6, by holding a 10 kg.

Figure 5 illustrates that the mechanical properties remain similar upon different reprocessing (ungluing/regluing) cycles, according to Example 7, of wooden substrates glued with thermally reversible adhesive prepared according to Example 1.

Figure 6 illustrates that the thermally reversible adhesive according to Example 1 can be used to provide bonding with between different types of materials, prepared according to Example 6, thus providing wood-wood bonding (wood-wood), wood-aluminium bonding (wood-metal), and aluminium-aluminium bonding (metal-metal).

It was further found that the failure mode for two pieces of material glued together with thermally reversible adhesive according to Example 1 was typically substrate failure (i.e. delamination of the wood) for a wood-wood sample and a wood-aluminium sample, while the failure mode for two pieces of aluminium (metal-metal) glued together was typically adhesive failure.

## Claims

1. A thermally reversible adhesive comprising a Diels-Alder polymer of at least a polymaleimide pre-polymer and a furan-functionalized lignin-derived compound;
   wherein the Diels-Alder polymer has a glass transition temperature of at least - 20 °C, as determined by Differential Scanning Calorimetry using a heating rate of 10 $K.min^{-1}$.

2. The thermally reversible adhesive as claimed in claim 1, wherein the Diels-Alder polymer has a glass transition temperature of at least -10 °C, preferably from 0 to 60 °C, more preferably from 5 to 50 °C, even more preferably from 10 to 30 °C.

3. The thermally reversible adhesive as claimed in claim 1 or 2, wherein the average maleimide functionality of the polymaleimide pre-polymer is at least 2.

4. The thermally reversible adhesive as claimed in any one of claims 1 to 3, wherein the polymaleimide pre-polymer is a bismaleimide.

5. The thermally reversible adhesive as claimed in any one of claims 1 to 4, wherein the average furan functionality of the furan-functionalized lignin-derived compound is at least 2, preferably from 2 to 5.

6. The thermally reversible adhesive as claimed in any one of claims 1 to 5, wherein the maleimide-to-furan stoichiometric ratio (r) between the polymaleimide pre-polymer and the furan-functionalized lignin-derived compound is from 1 to 0.25, preferably from 1 to 0.6.

7. The thermally reversible adhesive as claimed in any one of claims 1 to 6, wherein the polymaleimide pre-polymer has an aromatic content, determined as the ratio of the sum of the molecular weight of all atoms in and directly connected to an aromatic ring, relative to the total molecular weight of all atoms in the polymaleimide pre-polymer, of at most 50 %, preferably at most 40 %, more preferably at most 30 %, even more preferably from 0 to 20 %.

8. The thermally reversible adhesive as claimed in any one of claims 1 to 7, wherein the polymaleimide pre-polymer has a number average molecular weight ($M_n$) of at least 300 g/mol, preferably from 400 to 2500 g/mol, more preferably from 500 to 2000 g/mol.

9. The thermally reversible adhesive as claimed in any one of claims 1 to 8, wherein the lignin-derived compound of the furan-functionalized lignin-derived compound has a number average molecular weight ($M_n$) of at least 300 g/mol,

preferably from 400 to 2500 g/mol, more preferably from 500 to 2000 g/mol, even more preferably from 600 to 1700 g/mol.

**10.** The thermally reversible adhesive as claimed in any one of claims 1 to 9, wherein the lignin-derived compound is selected from a solvent extracted lignin, a depolymerized lignin, lignin monomers, lignin dimers, lignin oligomers, and any combinations thereof.

**11.** The thermally reversible adhesive as claimed in any one of claims 1 to 10, wherein the thermally reversible adhesive is the Diels-Alder polymer of a polymaleimide pre-polymer and a furan-functionalized lignin compound.

**12.** The thermally reversible adhesive as claimed in any one of claims 1 to 11, wherein the thermally reversible adhesive is provided as a sheet or a film.

**13.** A method to prepare the thermally reversible adhesive comprising a Diels-Alder polymer of a polymaleimide pre-polymer and a furan-functionalized lignin-derived compound as claimed in any one of claims 1 to 12, comprising mixing a mixture of the polymaleimide pre-polymer, the furan-functionalized lignin compound, and optionally an organic solvent, at a temperature of at least 10 °C.

**14.** Method as claimed in claim 13, further comprising the step of casting the thermally reversible adhesive into a mold and/or the step of thermally treating the thermally reversible adhesive at a temperature of at least 20 °C and/or the step of hotpressing the thermally reversible adhesive at a temperature of at least 90 °C.

**15.** Method as claimed in claim 13 or 14, wherein the polymaleimide pre-polymer has an aromatic content, determined as the ratio of the sum of the molecular weight of all atoms in and directly connected to an aromatic ring, relative to the total molecular weight of all atoms in the polymaleimide pre-polymer, of at most 50 %, preferably at most 40 %, more preferably at most 30 %, even more preferably from 0 to 20 %.

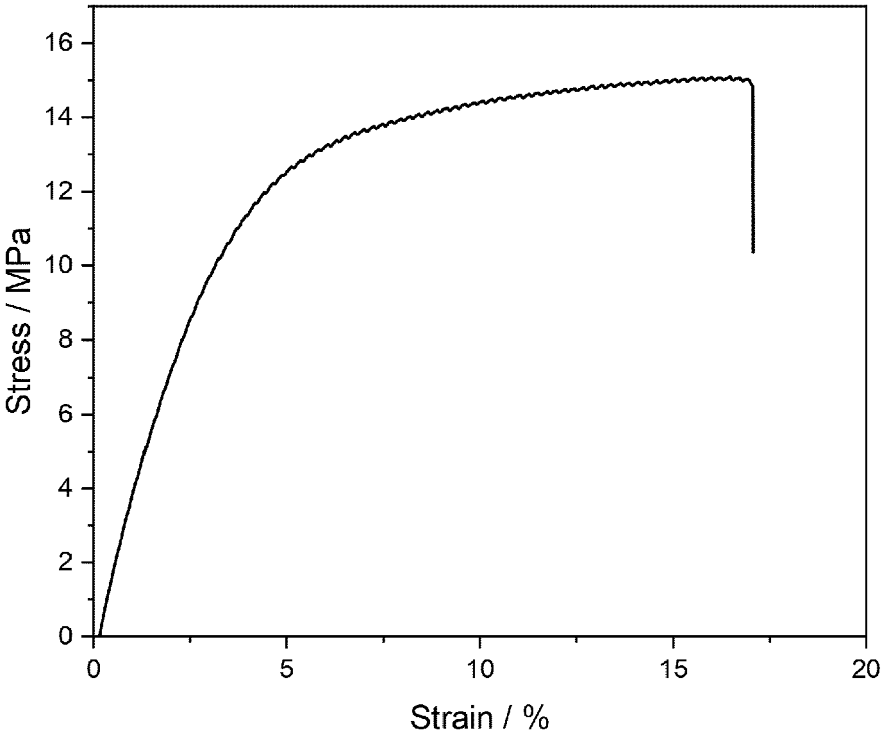
Stress / MPa
Strain / %
0
2
4
6
8
10
12
14
16
0
5
10
15
20

FIG. 1

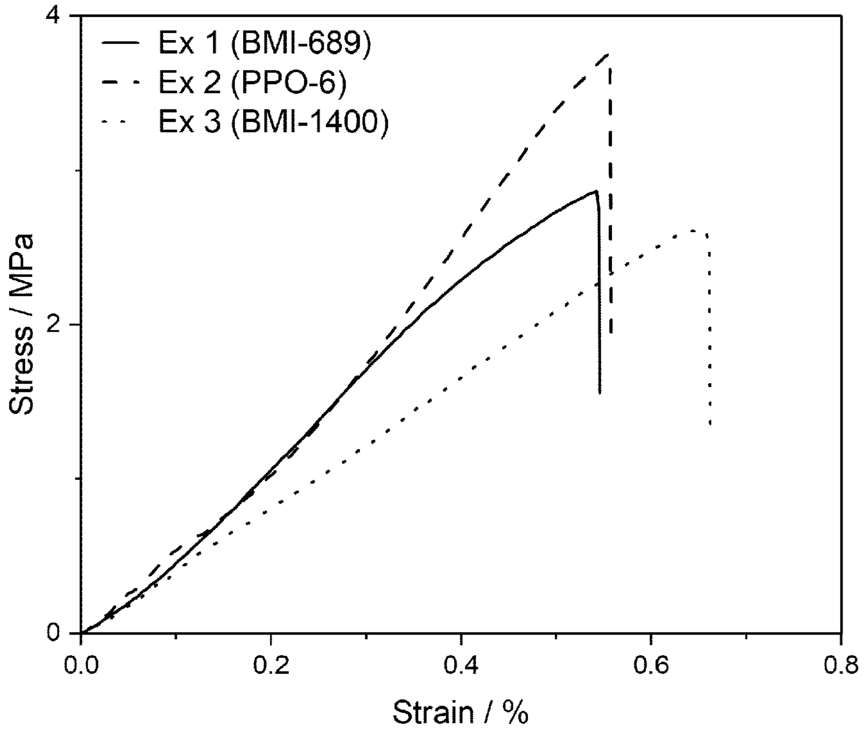
Ex 1 (BMI-689)
Ex 2 (PPO-6)
Ex 3 (BMI-1400)
Stress / MPa
Strain / %
0
2
4
0.0
0.2
0.4
0.6
0.8

FIG. 2

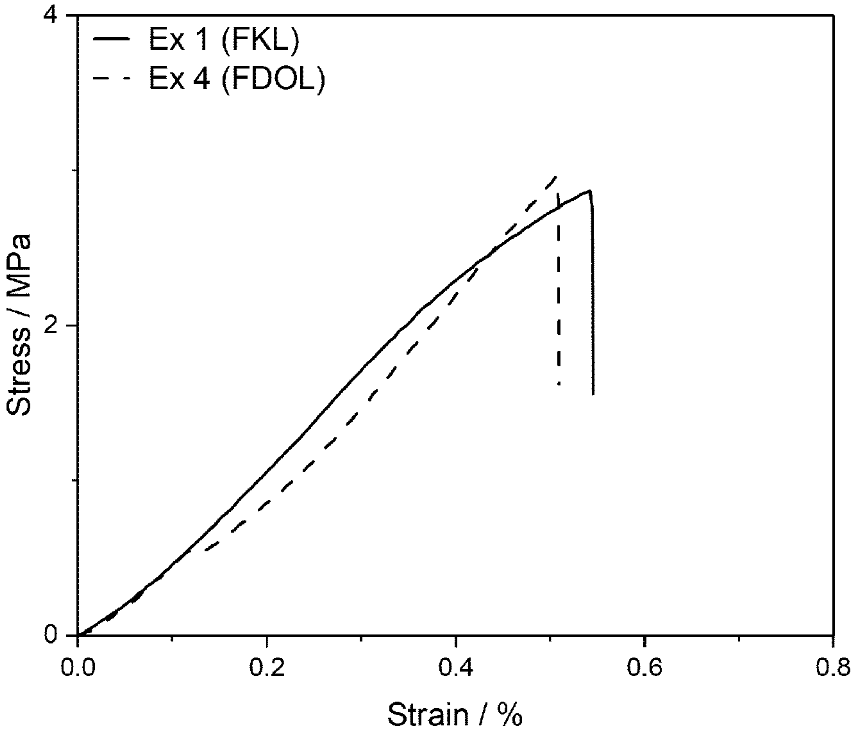


**FIG. 3**

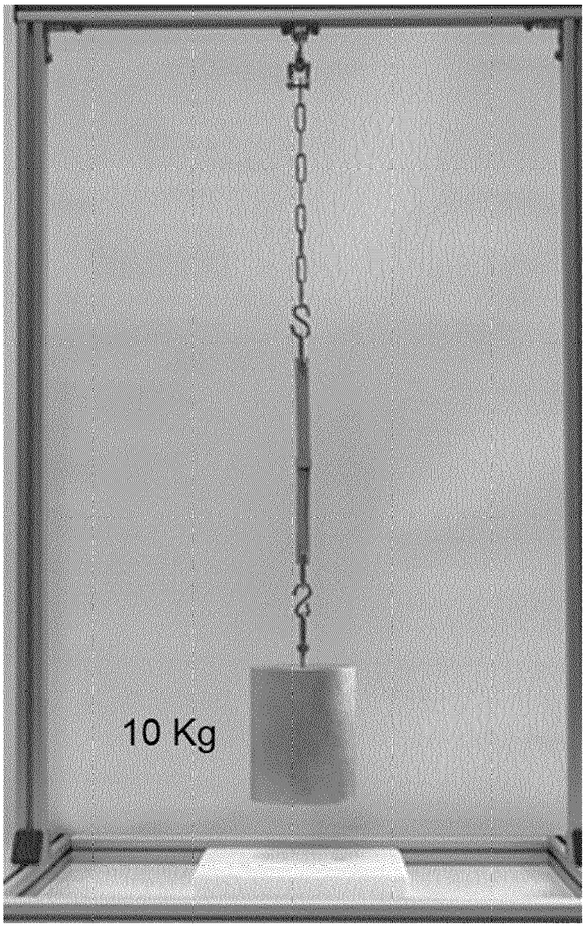


FIG. 4

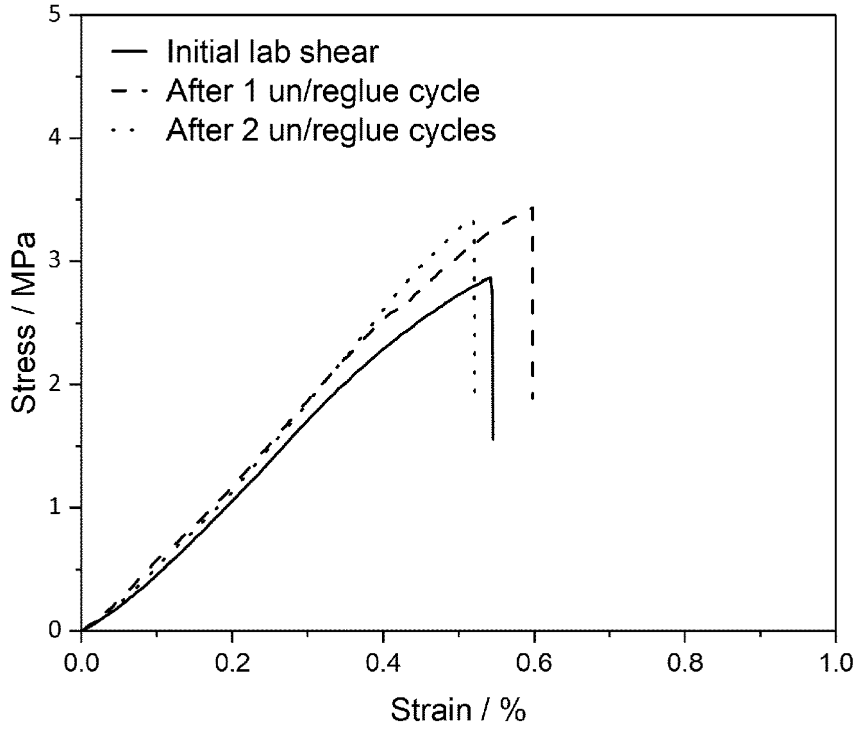
Initial lab shear
After 1 un/reglue cycle
After 2 un/reglue cycles
Stress / MPa
Strain / %
0
1
2
3
4
5
0.0
0.2
0.4
0.6
0.8
1.0

**FIG. 5**

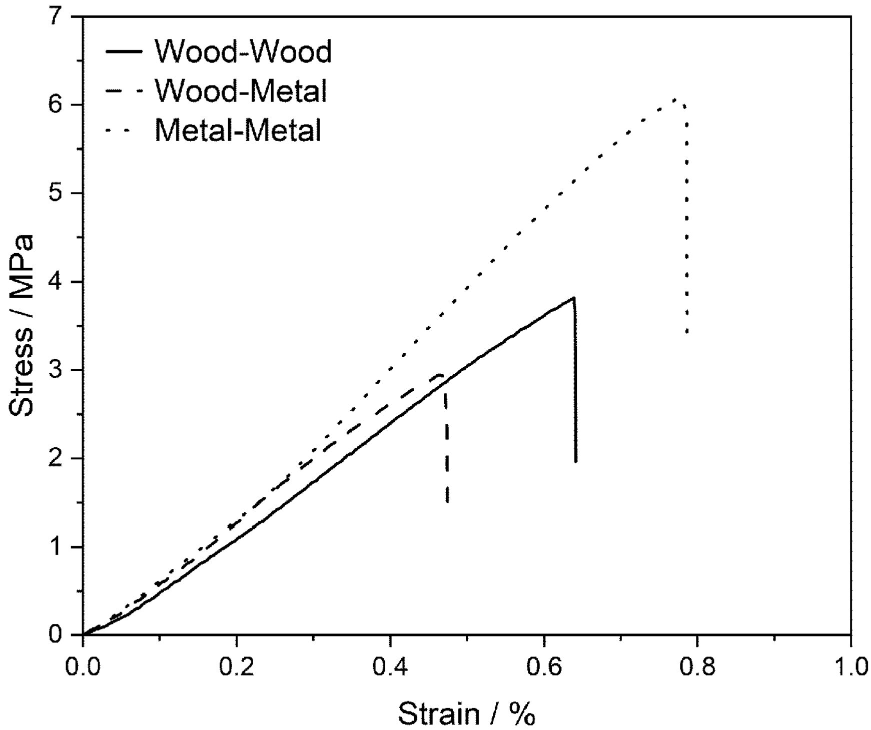
Wood-Wood
Wood-Metal
Metal-Metal
Stress / MPa
Strain / %
0
1
2
3
4
5
6
7
0.0
0.2
0.4
0.6
0.8
1.0

**FIG. 6**

Europäisches Patentamt
European Patent Office
Office européen des brevets

# EUROPEAN SEARCH REPORT

Application Number
EP 23 17 2733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 690 372 A (NANJING TECH DEVELOPMENT CO LTD INSTITUTE OF CHEMICAL INDUSTRY OF FORE) 22 September 2020 (2020-09-22) * claims * * examples * * figure 2 * ----- | 1-15 | INV. C08F232/06 C08F299/02 C08G73/12 C09J179/08 C09J197/00 |
| X | JP 2010 265377 A (NAT INST OF ADVANCED IND SCIEN) 25 November 2010 (2010-11-25) * claims * * examples * * paragraph [0050] * ----- | 1-11, 13-15 | |
| A | GANDINI ALESSANDRO ED - MÜLLER ALEJANDRO J ET AL: "The furan/maleimide Diels-Alder reaction: A versatile click-unclick tool in macromolecular synthesis", PROGRESS IN POLYMER SCIENCE, PERGAMON PRESS, OXFORD, GB, vol. 38, no. 1, 28 April 2012 (2012-04-28), pages 1-29, XP028977228, ISSN: 0079-6700, DOI: 10.1016/J.PROGPOLYMSCI.2012.04.002 [retrieved on 2012-04-28] * abstract * * Section 3; scheme 15; page 10 - page 12 * ----- | 1-15 | TECHNICAL FIELDS SEARCHED (IPC) C08F C09J C08J C08G |
| A | US 9 260 640 B1 (MAC MURRAY BENJAMIN C [US] ET AL) 16 February 2016 (2016-02-16) * claims * * examples * ----- | 1-15 | |
| A | US 2014/352884 A1 (MAYO JAMES D [CA]) 4 December 2014 (2014-12-04) * claims * * examples * ----- | 1-15 | |

The present search report has been drawn up for all claims

1

| Place of search | Date of completion of the search | Examiner |
|---|---|---|
| Munich | 29 October 2023 | Mader, Margarita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 17 2733

This annex lists the patent family members relating to the patent documents cited in the above-mentioned European search report. The members are as contained in the European Patent Office EDP file on The European Patent Office is in no way liable for these particulars which are merely given for the purpose of information.

29-10-2023

| Patent document cited in search report | Publication date | Patent family member(s) | Publication date |
|---|---|---|---|
| CN 111690372 A | 22-09-2020 | NONE | |
| JP 2010265377 A | 25-11-2010 | JP 5544615 B2 | 09-07-2014 |
| | | JP 2010265377 A | 25-11-2010 |
| US 9260640 B1 | 16-02-2016 | NONE | |
| US 2014352884 A1 | 04-12-2014 | DE 102014209708 A1 | 04-12-2014 |
| | | JP 6274965 B2 | 07-02-2018 |
| | | JP 2014234514 A | 15-12-2014 |
| | | US 2014352884 A1 | 04-12-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **SRIDHAR et al.** *Green Chem.,* 2020, vol. 22, 8669
- **TORR et al.** *Bioresource Technology,* vol. 102 (16), 7608-11
- **PU.** *Energy Environ. Sci.,* 2011, vol. 4, 3154-3166
- *Macromolecules,* 2021, vol. 54 (20), 9750-9760
- *ACS Sustainable Chem. Eng.,* 2018, vol. 6 (9), 11211-11218